# EUROPEAN PATENT APPLICATION

(11) **EP 1 110 454 A2**
(43) Date of publication of application: **27.06.2001**
(21) Application number: 00310751.3
(22) Date of filing: 04.12.2000
(51) Int. Cl.: A01N 43/78

(54) **5-Carboxanilido-haloalkylthiazoles as antimicrobial and marine antifouling agents**

(30) Priority: 16.12.1999 US 171227 P
(71) Applicant: ROHM AND HAAS COMPANY, Philadelphia, Pennsylvania 19106-2399 (US)
(72) Inventor: Michelotti, Enrique Luis, Fort Washington, Pennsylvania 19034 (US)
(74) Representative: Buckley, Guy Julian

(57) **Abstract**

The present invention relates to a method for inhibiting the growth of microorganisms and marine organisms at a locus. In particular, the present invention relates to the use of certain 5-carboxanilido-haloalkylthiazoles as antimicrobial and marine antifouling agents.

## Description

The present invention relates to a method for inhibiting the growth of microorganisms and marine organisms at a locus. In particular, the present invention relates to the use of certain 5-carboxanilido-haloalkylthiazoles as antimicrobial and marine antifouling agents.

Antimicrobial agents are used commercially to prevent microbial growth in water cooling towers, metalworking fluid systems, paints, wood, and other loci. Currently available antimicrobial agents include mixtures of 5-chloro-2-methyl-3-isothiazolone and 2-methyl-3-isothiazolones. While these isothiazolones are very effective in preventing microbial growth, they suffer from being slow killing and unstable under certain conditions. There is therefore a continuing need for antimicrobial agents which are stable, do not have a high salt content, have low use levels, provide quick speed of kill, and are safe to use in the environment.

Marine antifouling agents are used commercially to prevent growth of organisms on marine structures. Tributyltin oxide and other organotins have been the major marine antifouling agents in use for many years. There is currently much concern over the effects of tin on marine environments. For example, high levels of tin in harbor waters have been linked to shell deformation in some bivalve species, such as oysters. Some organic compounds have been suggested as marine antifouling agents. For example, US Patent No. 5,071,479 discloses the use of 3-iodopropargyl N-butyl carbamate as a marine antifouling agent. These types of compounds have not achieved commercial prominence because they do not meet the same performance requirements as tin based antifouling agents.

US Patent No. 5,045,554 discloses certain substituted 5-carboxanilido-thiazoles, methods for their preparation, and their use to control plant fungus diseases such as, for example *Basidiomycetes* (such as *Rhizoctonia, Sclerotium,* and *Corticium),* as well as *Alternaria* and *Spirothica,* when applied to the growing plant, preferably as a foliar spray.. This patent neither teaches nor suggests that such compounds can be used as antimicrobial or antifouling agents. The organisms typically controlled by agricultural fungicides are very different from those controlled by marine antifouling agents or microbicides. Marine antifouling agents control multicellular organisms and slime, such as diatoms, barnacles, hydroids, grassy brown felt algae, and the like. The effectiveness of agrochemical fungicides useful in combating fungi on plants cannot be used to predict the effectiveness of these compounds as marine antifouling agents in sea water and brackish water.

The present invention provides a method of inhibiting the growth of microorganisms in, at, or on a locus subject to microbial attack, comprising introducing to the locus an antimicrobially effective amount of one or more antimicrobial agents of formula I: 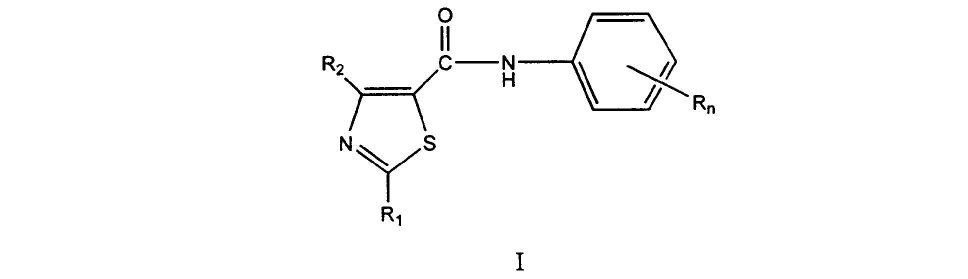 wherein: R₁ is (C₁-C₂)haloalkyl or (C₁-C₅)alkyl (preferably R₁ is methyl, ethyl, or trifluoromethyl, most preferably methyl or trifluoromethyl); R₂ is (C₁-C₅)alkyl or (C₁-C₂)haloalkyl (preferably R₂ is halomethyl, more preferably perhalomethyl, most preferably trifluoromethyl); provided that at least one of R₁ and R₂ is a (C₁-C₂)haloalkyl; each R is independently halo (preferably chloro, bromo, or iodo), halo(C₁C₅)alkyl (preferably halo(C₁-C₂)alkyl, more preferably perhalomethyl, most preferably trifluoromethyl), halo(C₁-C₅)alkoxy (preferably halo(C₁C₂)alkoxy_{,} more preferably perhalomethoxy, most preferably trifluoromethoxy), nitro, cyano, pentahalosulfur (preferably pentafluorosulfur), halomethylthio, haloethylthio, (C₁-C₂)alkylsulfinyl, halo(C₁-C₂)alkylsulfinyl, (C₁-C₂)alkylsulfonyl, or halo(C₁-C₂)alkylsulfonyl; n is from one to five (preferably two to five); and its microbicidal or antifoulant acceptable salts (preferably a salt of a strong base, more preferably a salt from reaction with sodium or potassium hydroxide, diazabicycloundecene, or diazabicyclononane, most preferably a salt formed from reaction with sodium or potassium hydroxide). Preferably each R is independently halo, haloalkyl, or haloalkoxy. In one preferred class of compounds, R₁ is methyl and R₂ is perhalomethyl, preferably trifluoromethyl. In another preferred class of compounds, R₁ and R₂ are each perhalomethyl, preferably trifluoromethyl. In another preferred class, R₁ is difluoromethyl and R₂ is trifluoromethyl.

The present invention is further directed to a method of controlling or inhibiting the growth of marine organisms on a marine structure comprising introducing into or onto the structure to be protected an effective amount of the compound of formula (I) as described above.

The term "carboxanilido" means C₆H₅-NH-CO-.

The terms "antimicrobial agent" and "microbicide" refer both to a compound capable of inhibiting microbial growth (a preservative), and a compound capable of reducing microbial concentration (a disinfecting agent), within a given system. The term "antimicrobial activity" refers to the activity of the antimicrobial agent to eliminate, inhibit or prevent the growth of microorganisms. The terms "microbial organism," "microbe" and "microorganism" are used interchangeably and refer to microorganisms such as, but not limited to, fungi, bacteria, and algae. The term "industrial fungi" refers to fungi that contaminate industrial systems and products. "Industrial systems" refers to systems used in manufacturing and industry, such as cooling towers, air washers, printing fluids, metal working fluids, hydraulic fluids, lubricants, mineral slurries, and the like. The term "pests" refers to both microorganisms and marine organisms. "Locus" refers to a structure, product or industrial system subject to contamination by microorganisms or marine organisms.

"Marine antifouling agent" includes algaecides and molluscicides. "Marine antifouling activity" is intended to include both the elimination of and inhibition of growth of marine organisms. Marine organisms controlled by marine antifouling agents suitable for use in this invention include both hard and soft fouling organisms. Generally speaking, the term "hard fouling organisms" refers to invertebrates having some type of hard outer shell, such as barnacles, tubeworms, and molluscs and the term "soft fouling organisms" refers to plants and invertebrates, such as slime, algae, kelp, soft corals, tunicates, hydroids, sponges, and anemones.

The term "alkyl" means straight or branched chain (C₁-C₅)alkyl, unless otherwise specified.

All percentages are percent by weight, unless otherwise specified. All percentage ranges are inclusive. All ratios are by weight and all ratio ranges are inclusive. As used herein, the following abbreviations are applied: ppm = parts per million; MIC = minimum inhibitory concentration; ASTM = American Society for Testing and Materials; nm = nanometer; g = gram; mg = milligram; ug = microgram; uL microliter; DMSO = dimethyl sulfoxide; DMF = dimethyl formamide; Abs. = absorbance; and DI = deionized.

In the present invention, the compounds of formula I are generally synthesized by reacting an appropriately substituted thiazole having a 5-carbonylchloride substituent with an appropriately substituted aniline in suitable solvents at an elevated temperature according to the procedures described in U. S. Patent No. 5,045,554, hereby incorporated by reference. Suitable solvents include, for example, xylene, tetrahydrofuran, toluene, chlorobenzene, collidine, and 2,6-di-t-butyl-4-methyl-pyridine. The 2,4-bis-trifluoromethylthiazole-5-carboxanilides are prepared using procedures analogous to the following:

### Preparation of 2,4-bis-trifluoromethylthiazole-5-carboxylic acid chloride

### Step 1 - Preparation of trifluorothioacetamide:

To a 1L 4-neck round bottom flask (RBF), equipped with a mechanical stirrer, nitrogen inlet, addition funnel and thermometer, was charged trifluoroacetamide (56.0 grams (g), 1.0 equiv. 0.495 mole) and 100 g of Lawesson's reagent followed by 500 milliliters (mL) of tetrahydrofuran. The reaction mixture was heated to boiling for 2 hours. The solvent was carefully removed by rotary evaporation to yield 86 g of crude product. This material was distilled by kugelrohr distillation under high vacuum (<1 mm Hg) to afford 54 g of light yellow liquid trifluorothioacetamide (84% yield).

### Step 2 - Preparation of ethyl chlorotrifluoroacetoacetate:

To a 500 mL 3-neck RBF equipped with a magnetic stirrer, nitrogen inlet, thermometer and gas bubbler was charged 200 g of ethyl trifluoroacetoacetate. Using an acetone/ice bath the reaction vessel was cooled to 0-10 °C and at this temperature chlorine gas was added to the reaction vessel via a gas bubbler at sufficient rate to maintain the reaction from 5 to 15 °C. Chlorine gas was added until a yellow color persisted in the reaction mixture. The reaction solution was allowed to warm to room temperature and then heated to 30C while gas was evolved. When the gas evolution stopped, the resulting mixture provided 226 g of product (95% yield).

### Step 3 - Preparation of ethyl 2,4-bis-trifluoromethyl-5-thiazole carboxylate:

To a 3L 4-neck RBF equipped with a mechanical stirrer, reflux condenser, thermometer and addition funnel was charged 358 g of ethyl chlorotrifluoroacetoacetate (1.64 moles), 2,2,2-trifluorothioacetamide and 1000 mL of acetonitrile. To this mixture was added 331.9 g of triethylamine (2.0 eq, 3.28 moles) dropwise over 2.5 hours. During the addition the temperature was maintained at 30-38 °C and upon completion of the addition the reaction was heated to reflux for 2 hours and stirred overnight at room temperature. The reaction mixture was filtered and the resulting filtrate was concentrated by rotary evaporation to provide an oily solid which was dissolved in 1500 mL of ethyl acetate. This was washed with 2 x 500 mL of water, 1 x 500 mL of brine and concentrated by rotary evaporation to yield 356.6 g of ethyl 2,4-bis-trifluoromethyl-5-thiazole carboxylate which was purified by distillation.

### Step 4 - Preparation of 2,4-bis-trifluoromethylthiazole-5-carboxylic acid:

To a 1L 4-neck RBF was charged ethyl 2,4-bis-trifluoromethyl-5-thiazole carboxylate (23.8 g, 1.0 equiv., 81.2 mmole) in 100 mL THF and 50 mL water. The reaction mixture was cooled to 20 °C and 10% NaOH solution (32.5 g, 1.0 equiv., 81.2 mmole) was added. The ice-bath was removed after 5 minutes and the mixture was stirred for 4 hours. After reaction was complete, as determined by thin layer chromatography, 100 mL ether and 100 mL water were added. The aqueous phase was separated and acidified with conc. HCl, extracted with ether, and the ether was removed by rotary evaporation to give a solid which was washed with water and vacuum filtered. The solid was dried in a vacuum oven to give 16.5 g (76.7% yield) product as a brown solid, mp = 98-101 °C.

### Step 5 - Preparation of 2,4-bis-trifluoromethylthiazole-5-carboxylic acid chloride:

To a 500 mL 1-neck RBF under N2 was added 2,4-bis-trifluoromethyl-thiazole-5-carboxylic acid (31.5 g, 1.0 equiv., 0.119 moles) in 25 mL chloroform and 1 mL dimethylformamide (DMF). To this solution was added thionyl chloride (28.3 g, 2.0 equiv., 0.24 moles). The reaction was then heated at reflux for 6 hours. The reaction was cooled to room temperature and concentrated by rotary evaporation at 30 °C to remove solvent. Chloroform was added, 3 x 25 mL portions, concentrating by rotary evaporation each time, to give 29.8g (88.4% yield) product as a brown oil.

### Aniline Coupling Reactions

### Preparation of N-(2,4,6-trichlorophenyl)-2,4-bis-trifluoromethylthiazole-5-carboxanilide (Compound 24):

To a 250 mL 1-neck RBF under nitrogen was added 2,4-bis-trifluoromethyl-thiazole-5-carboxylic acid chloride(25.8 g, 1.0 equiv., 91.0 mmoles) in 30 mL toluene and then 2,4,6-trichloroaniline (17.9 g, 1.0 equiv., 91.0 mmoles). The mixture was heated at reflux for 6 hours with monitoring by gas-liquid chromatography (GLC). Upon completion the reaction was cooled to room temperature. A dark colored solid formed upon cooling after residual toluene was evaporated. The dark colored solid was washed with methylene chloride, vacuum filtered, and further washed with hexanes to give 33.2 g (82.2% yield) product as an off-white solid, mp = 180-182 °C.

The antimicrobial agents of the present invention can be used to inhibit the growth of microorganisms by introducing a microbicidally effective amount of one or more of the agents onto, into, or at a locus subject to microbial attack. Suitable loci include, but are not limited to: cooling towers; air washers; boilers; mineral slurries; wastewater treatment; ornamental fountains; reverse osmosis filters; ultrafilters; ballast water; evaporative condensers; heat exchangers; pulp and paper processing fluids; plastics; emulsions and dispersions; paints; latexes; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom disinfectants or sanitizers; cosmetics and toiletries; shampoos; soaps; detergents; industrial disinfectants or sanitizers, such as cold sterilants, hard surface disinfectants; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oil field fluids, such as injection water, fracture fluids, and drilling muds; agriculture adjuvant preservation; surfactant preservation; medical devices; diagnostic reagent preservation; food preservation, such as plastic or paper food wrap; pools; and spas. Preferred loci are wood and wood products, cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; and coatings. Depending upon the locus, the compounds of the present invention may be either directly incorporated into the locus, applied directly to the locus, or incorporated into a coating which is then applied to the locus.

The amount of the microbicide of the invention necessary to control or inhibit the growth of microorganisms depends upon the locus to be protected, but is typically sufficient if it provides from 0.5 to 2500 ppm of microbicide, at the locus to be protected. Microbicides are often used in loci that require further dilution. For example, compositions incorporating compounds of Formula I may be added to a metal working fluid concentrate, which is then further diluted. The amount of such compositions necessary to control microorganism growth in the final metal working fluid dilution are sufficient if they provide generally from 5 to 50 ppm of the microbicide in the final dilution. In loci such as a paint, which is not further diluted, the amount of the compositions of the invention necessary to control microorganism growth are sufficient if they provide generally from 500 to 2500 ppm of the microbicide.

It is known in the art that the performance of antimicrobial agents may be enhanced by combination with one or more other antimicrobial agents. Thus, other known antimicrobial agents may be combined advantageously with the antimicrobial agents of this invention. Preferred agents to be combined with the antimicrobial agents of the present invention include, for example, methylenebis(thiocyanate); 5-chloro-2-methyl-4-isothiazolin-3-one; 2-methyl-4-isothiazolin-3-one; as 2-n-octyl-4-isothiazolin-3-one; 4,5-dichloro-2-n-octyl-4-isothiazolin-3-one; 1,2-benzisothiazolin-3-one; zinc 2-pyridinethiol-1-oxide; sodium 2-pyridinethiol-1-oxide; N'-[3,4-dichlorophenyl]-N,N-dimethylurea; 3-iodopropargyl-N-butylcarbamate; 10,10'-oxybisphenoxyarsine; 2-(thiocyanomethylthio)benzothiazole; 3-bromo-1-chloro-5,5-dimethylhydantoin; 2,2-dibromo-3-nitrilopropionamide; pentane-1,5-dial; and 2-bromo-2-nitro-1,3-propanediol.

The compounds of the present invention may also be used in conjunction with non-chemical methods of microbial control, such as ultraviolet light; ionizing radiation; copper electrodes; silver electrodes; and enzymes, such as cellulase, alpha-amylase, protease, polysaccharidase, and levan hydrolase.

If one of the antimicrobial agents of the invention is to be combined with a second antimicrobial agent, the weight ratio of the first antimicrobial agent to the second antimicrobial agent may be from 99:1 to 1:99; preferably, 75:25 to 25:75. The total of the combined antimicrobial agents necessary to inhibit or prevent the growth of microbes is generally 0.05 to 10,000 ppm, based on the volume of the locus to be protected.

The antimicrobial agents of the present invention may be added directly to a locus to be protected or may be added as a formulation. The antimicrobial agents of the present invention may be formulated in a variety of liquid or solid formulations. The particular type (that is, solid or liquid) and composition of the formulation used will depend on the locus to be protected and the characteristics of the formulation sought. For example, where splash hazards are a concern or where controlled release is desired, solid formulations may be preferred. Liquid formulations may be preferred where the formulation is metered into a locus over a period of time. Solid formulations are particularly useful in loci such as cooling towers, latexes, and plastics. Liquid formulations are particularly useful in loci such as paints, cosmetics; household cleaners; and water treatment applications.

In general, the antimicrobial agents of the present invention may be formulated in liquid form by dissolving the antimicrobial agent in a carrier. Suitable carriers include water, an organic solvent, or mixtures thereof. Any organic solvent is suitable as long as it is compatible with the end use and does not destabilize the antimicrobial agent. Suitable organic solvents include, but are not limited to: aliphatic and aromatic hydrocarbons, such as xylene and mixtures of alkylbenzenes; halogenated aliphatic and aromatic hydrocarbons, such as ethylene dichloride and monochlorobenzene; alcohols, such as monohydric, dihydric, and polyhydric alcohols, such as ethylene glycol, diethylene glycol, propylene glycol, dipropylene glycol; aldehydes; ketones, such as acetone, methyl ethyl ketone, and methyl iso-butyl ketone; ethers; glycol ethers; glycol ether acetates; saturated and unsaturated fatty acids having at least four carbon atoms; esters, such as ethyl acetate, butyl acetate, glycol esters, and phthalate esters; and phenols. Preferred organic solvents are glycol ethers; glycol ether acetates; aliphatic and aromatic hydrocarbons; and alcohols.

Aqueous formulations of the antimicrobial agents of the present invention may be prepared as dispersions, such as polymeric dispersions; emulsions; emulsion concentrates; microemulsions; and microemulsion concentrates. The dispersions, emulsions, and microemulsions can have either oil continuous or water continuous phases. Aqueous formulations typically contain 0.001 to 50 percent of the antimicrobial agent of the present invention, up to 99 percent organic solvent, 0.5 to 55 percent surfactant, up to 15 percent adjuvants, and up to 95 percent water. Suitable surfactants are anionic, such as alkyl lauryl sulfonate salts and fatty alcohol ethoxylate sulfates; cationic; nonionic, such as ethylene oxide-propylene oxide copolymers; and amphoteric. Typical adjuvants suitable for use in formulations include, but are not limited to: additional surfactants, dispersants, spreaders, stickers, thickeners, anti-freeze agents, antifoam agents, emulsifiers, and other similar materials described in *McCutcheon's Emulsifiers and Detergents, McCutcheon's Emulsifiers and Detergents/Functional Materials,* and *McCutcheon's Functional Materials,* all published annually by McCutcheon Division of MC Publishing Company (New Jersey).

Suitable solid formulations of the antimicrobial agents of the present invention include, but are not limited to: polymeric encapsulants, such as those prepared by interfacial condensation, coacervation, in-situ polymerization, and physical methods; inclusion complexes, such as clathrates; liposomes; matrix blends, such as granulars, dispersible granulars, and wettable powders; and ion exchange resins. Polymeric encapsulants can be prepared having either a core shell or monolithic structure. Suitable polymeric encapsulants include, but are not limited to: polyureas, polyamides, polyesters, urea-formaldehydes, melamine-formaldehydes, polyacrylic acid and its esters, phenol-formaldehydes, and acetoacetates.

Inclusion complexes may be prepared by incorporating the antimicrobial agent of the present invention in a host molecule. Suitable host molecules include, but are not limited to: a-cyclodextrin; b-cyclodextrin; γ-cyclodextrin; cyclodextrin derivatives, such as methyl-β-cyclodextrin; crown ethers; ureas; hydroquinones; dichlorophene; hydroxybenzophenone; and 1,1,2,2-tetrakis-(4-hydroxyphenyl)ethane. The inclusion complex can be used as a solid composition, adsorbed onto a solid carrier, or dispersed in a non-reactive solvent. Inclusion complexes are useful in water treatment, metalworking fluid, and paint applications.

Liposomes can be prepared by dissolving the antimicrobial agents of the present invention and a lipid, such as a phospholipid, in a suitable solvent, such as chloroform. The solvent is removed, a buffer added, and the composition is agitated to produce the desired particle size. The liposomes may be multilamellar, unilamellar, or have large or small particle size. Liposomes are useful in solvent based paint and cosmetics applications.

Matrix blends can be prepared by adsorbing the antimicrobial agents of the present invention onto a solid carrier with the addition of appropriate additives in order to make granulars, wettable powders, and dispersible granulars. These matrix blends may be used as is or may be further processed into pellets, tablets, or briquettes by any conventional means. Granulars typically comprise 1 to 60 percent antimicrobial agent of the present invention; 30 to 98 percent of an absorbent carrier, such as diatomaceous earth, water soluble solids, magnetic particles, or fumed inorganics, such as silica, titanium, and zinc oxide; and 1 to 10 percent adjuvants. Wettable powders typically comprise 1 to 60 percent antimicrobial agent of the present invention; 1 to 5 percent wetting agent; 1 to 20 percent dispersant; 10 to 95 percent adsorptive carrier, such as fumed inorganics or clay; and up to 10 percent adjuvants. Dispersible granulars typically comprise 1 to 60 percent antimicrobial agent of the present invention; 30 to 95 percent adsorptive carrier, such as fumed inorganics or clay; 5 to 40 percent dispersant; up to 10 percent surfactant; and up to 15 percent adjuvant. Dispersible granulars may be further extruded, dried and processed into granulars.

Application of the compounds of Formula I onto or into wood, wood products, or timber may be accomplished using conventional techniques such as immersion of the timber into a liquid composition, painting by spraying or brushing, dipping, or injecting the composition into the timber. For such applications, the concentration of the compound of Formula I in the composition should be sufficient to provide an effective amount of the compound in or on the timber. Wood or timber may also be impregnated with compounds of Formula I using well know procedures such as, for example, pressure treatments such as the Lowery empty cell process and full cell process, vacuum treatment, hot and cold bath treatment, thermal treatment, and cold-soak treatment.

Marine antifouling agents of the present invention can be used to control or inhibit the growth of marine organisms by application of the compositions onto or into a marine structure. Depending upon the particular marine structure to be protected, the compositions of the present invention can be directly incorporated into the marine structure, applied directly to the marine structure, or incorporated into a coating which is then applied to the marine structure. Suitable marine structures include, but are not limited to: boats, ships, oil platforms, piers, pilings, docks, elastomeric rubbers, and fish nets and line. The compositions of the present invention are typically directly incorporated into structures such as elastomeric rubber or fish net fibers during manufacture. Direct application of the compositions of the invention is typically made to structures such as fish nets or wood pilings. The compositions of the invention can also be incorporated into a marine coating, such as a marine paint or varnish.

In general, the amount of marine antifouling agent necessary to inhibit or prevent the growth of marine organisms is from 0.1 to 30 percent based on the weight of the structure to be protected or based on the weight of the coating to be applied. When the marine antifouling agents of the invention are directly incorporated into or directly applied onto a structure, the amount of the antifouling agent suitable to inhibit the growth of marine organisms is generally from 0.1 to 30 percent based on the weight of the structure. It is preferred to use an amount from 0.5 to 20 percent; more preferably, from 1 to 15 percent. When incorporated into a coating, the amount of marine antifouling agent suitable to inhibit the growth of marine organisms is generally from 0.1 to 30 percent based on the weight of the coating. The amount of marine antifouling agent is preferably from 0.5 to 15 percent; more preferably, from 1 to 10 percent. If one of the marine antifouling agents of the invention is to be combined with a second marine antifouling agent, the ratio of the first marine antifouling agent to the second marine antifouling agent is from 99:1 to 1:99; preferably, from 75:25 to 25:75. The total of the combined marine antifouling agents necessary to inhibit or prevent the growth of marine organisms is from 0.1 to 30 percent based on the weight of the structure to be protected or the weight of the coating to be applied.

In general, the compositions of compounds of Formula I comprising a marine antifouling agent are incorporated in a carrier such as water; organic solvent, such as xylene, methyl isobutyl ketone, and methyl isoamyl ketone; or mixtures thereof. Direct application of the compounds of Formula I may be by any conventional means, such as dipping, spraying, or coating. Fish nets, for example, may be protected by dipping the fish nets into a composition comprising compounds of Formula I and a carrier or by spraying the fish nets with the composition. Structures such as wood pilings and fish nets may be protected by directly incorporating the compounds of Formula I into the structure. For example, a composition of compounds of Formula I further comprising a carrier may be applied to wood used for pilings by means of pressure treatment or vacuum impregnation. These compositions may also be incorporated into a fish net fiber during manufacture.

Marine coatings comprise a binder and solvent and optionally other ingredients. The solvent may be either an organic solvent or water. The compositions of the invention are suitable for use in both solvent- and water-based marine coatings. Solvent-based marine coatings are preferred. Any conventional binder may be utilized in the marine antifouling coating incorporating the compositions of the invention. Suitable binders include, but are not limited to: polyvinyl chloride in a solvent-based system; chlorinated rubber in a solvent based system; acrylic resins in solvent-based or aqueous systems; vinyl chloride-vinyl acetate copolymer systems as aqueous dispersions or solvent-based systems; butadiene -styrene rubbers; butadiene-acrylonitrile rubbers; butadiene-styrene-acrylonitrile rubbers; drying oils such as linseed oil; asphalt; epoxies; siloxanes; and the like. Such marine coatings may optionally contain one or more of the following: inorganic pigments, organic pigments, and/or dyes, and controlled release materials, such as rosin. Water-based coatings may also optionally contain: coalescents, dispersants, surface active agents, rheology modifiers, or adhesion promoters. Solvent-based coatings may also optionally contain extenders, plasticizers, or rheology modifiers. A typical marine coating comprises 2 to 20 percent binders, 0 to 15 percent rosins/modified rosins, 0.5 to 5 percent plasticizers, 0.1 to 2 percent antisettling agent, 5 to 60 percent solvent/diluent, 0 to 70 percent cuprous oxide, 0 to 30 percent pigments (other than cuprous oxide), and 0 to 15 percent marine antifouling agent.

It is known in the art that the performance of marine antifouling agents may be enhanced by combination with one or more other marine antifouling agents. Thus, other known marine antifouling agents may be combined advantageously with the marine antifouling agents of this invention. The compounds of Formula I may be combined with, for example, tin based marine antifoulants. Such a combination has the advantage of reducing the amount of tin used and thereby lessening the amount of tin in the environment. Combinations with other known marine antifouling agents may also provide enhanced control of marine fouling organisms.

The following examples are presented to illustrate further various aspects of the present invention, but are not intended to limit the scope of the invention in anv respect. The following compounds of formula I were tested:

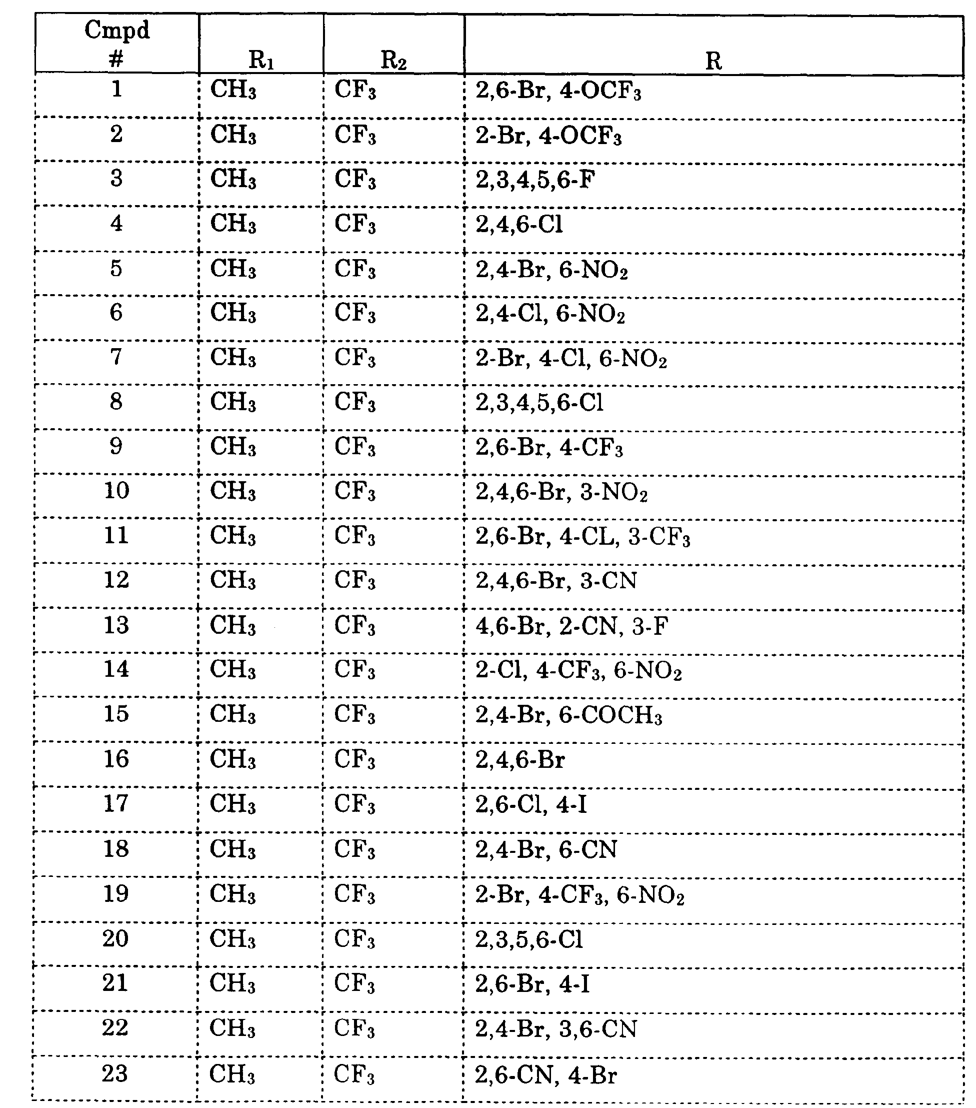

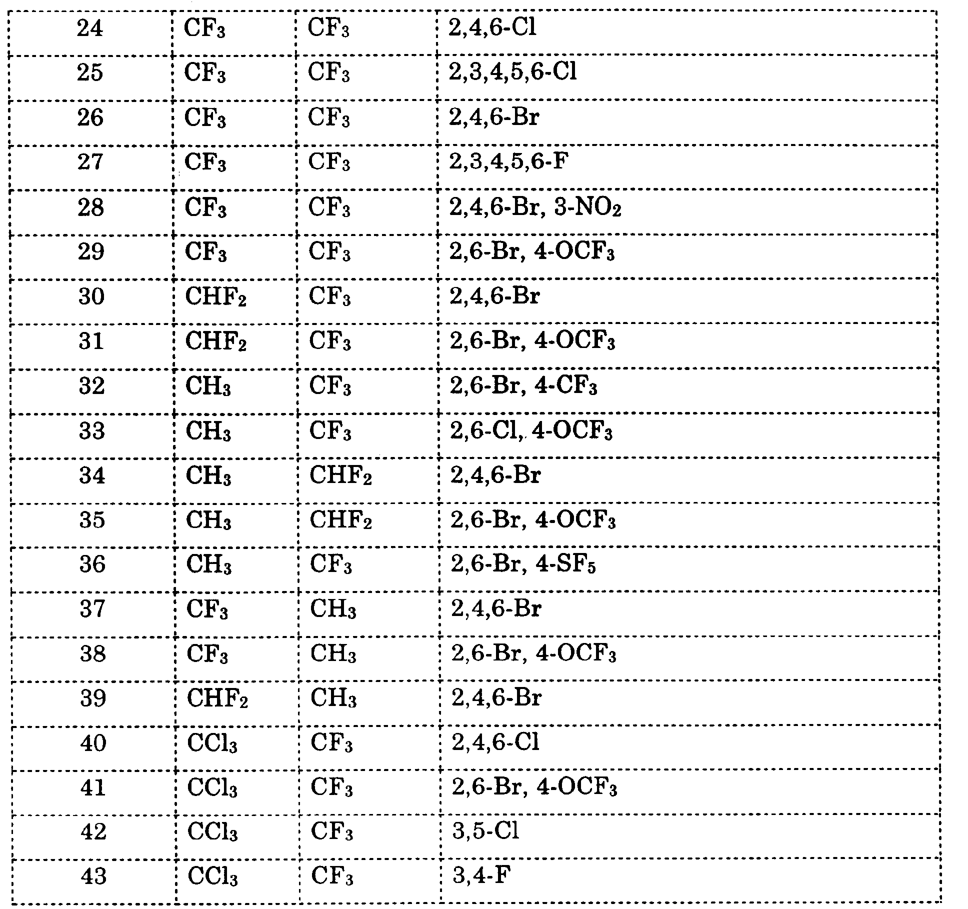

### Example 1 - Antimicrobial Activity

The spectrum of antimicrobial activity of the antimicrobial agents useful in the present invention were determined in Minimum Inhibitory Concentration (MIC) tests. MICs were determined by two fold serial dilutions of a compound in Minimal Salts Media (M9G), Trypticase Soy Broth (TSB) or Tryticase Soy Broth and anionic surfactant (TSBA). The compounds were tested against *Aspergillus niger, Rhodotorula rubra, Escherichia coli* and *Pseudomonas aeruginosa.* Results of the MIC tests are shown below.

**Table 1**

| Cmpd # | *E.Coli* M9G | *E. Coli* TSB | *P. aeruginosa* TSB | A. *niger* TSB | R. *Rubra* M9G | *R. Rubra* TSB | *E. coli* TSBA |
|---|---|---|---|---|---|---|---|
| 1 | >300 | | | >50 | 300 | >50 | |
| 2 | >300 | | | | 300 | | |
| 3 | >150 | >150 | >150 | >30 | 30 | >30 | >150 |
| 4 | >300 | | | | 300 | | |
| 5 | 300 | | | | 300 | | |
| 6 | 300 | | | | 300 | | |
| 7 | 300 | | | | 300 | | |
| 8 | 300 | | | | 300 | | |
| 9 | 150 | >150 | >150 | >730 | 30 | >30 | >150 |
| 10 | 300 | | | | 300 | | |
| 11 | 300 | | | | 300 | | |
| 12 | 300 | | | | 300 | | |
| 13 | 300 | | | | 300 | | |
| 14 | 300 | | | | 300 | | |
| 15 | 300 | | | | 300 | | |
| 16 | 300 | | | | 300 | | |
| 17 | 300 | | | | 300 | | |
| 18 | >300 | | | | 300 | | |
| 19 | >300 | | | | 300 | | |
| 20 | >300 | | | | 300 | | |
| 21 | >300 | | | | 300 | | |
| 22 | >300 | | | | 300 | | |
| 23 | >300 | | | | 300 | | |
| 24 | >300 | | | | 300 | | |
| 25 | >300 | | | | 300 | | |
| 26 | >300 | | | | 300 | | |
| 27 | 75 | 150 | >150 | 3.8 | <3 | 3,8 | 150 |
| 28 | >300 | | | | 300 | | |
| 29 | >300 | | | | 300 | | |

| | | | | | | | |
|---|---|---|---|---|---|---|---|
| 30 | 300 | | | | 300 | | |
| 31 | 300 | | | | 300 | | |
| 32 | 150 | >150 | >150 | >30 | | >30 | >150 |
| 33 | 300 | | | | 300 | | |
| 34 | 300 | | | | 300 | | |
| 35 | 300 | | | | 300 | | |
| 36 | 300 | | | | 300 | | |
| 37 | 300 | | | | 300 | | |
| 38 | >300 | | | | 300 | | |
| 39 | 300 | | | | 300 | | |
| 40 | >300 | | | | >300 | | |
| 41 | >300 | | | | 300 | | |
| 42 | 300 | | | | 300 | | |
| 43 | >300 | | | >30 | 30 | 30 | |

The above results show that all of the compounds show some level of microbicidal activity against at least one microorganism. Compounds 3, 9, 27, and 43 are surprisingly effective at controlling microorganisms.

### Example 2 - Activity Against Soft Fouling Organisms

Tests were conducted to determine the inhibitory effect of the compounds of formula I on *Amphora* and on *Dunaliella. Amphora,* marine diatoms, and *Dunaliella,* a marine alga, are representative of soft fouling organisms.

*Amphora coffeaeformis* var. *perpusilla* was isolated from a natural biofilm and cultured axenically in Guillard's F2 medium. A log phase culture of *Amphora* was diluted with F2 medium to give a chlorophyll *a* concentration of 0.25 mg/mL. Chlorophyll a was measured by passing a measured volume (FV) of cell culture through a 3 mm pore, 25 mm diameter cellulose nitrate filter. The filter plus trapped algal cells was transferred to a glass tube. A measured volume (SV) of DMSO solvent was added to the glass tube. The tubes were incubated for 1.5 hours in darkness. After incubation, the absorbance of the sample was read in a spectrophotometer at 630 and 664 nm against a DMSO/filter blank. The chlorophyll a concentration is calculated using the following equation:
Chlorophyll *a* (mg/mL) = 11.47 x Abs. ₆₆₄ - 0.4 x Abs. ₆₃₀ x SV/FV

Ten mL of the diluted culture was pipetted into glass tubes. Ten uL of marine antifouling agent or, in the case of controls, DMF was added to each glass tube. The tubes were incubated on an illuminated orbital shaker at 200 °C for 96 hours before the chlorophyll *a* concentration of each tube was measured. Three replicates of each treatment were used. The effects of marine antifouling agents are calculated as percent inhibition of the mean control. The EC50 is the dose, in ppm, effective at preventing 50% growth.

The tests on *Dunaliella* were conducted using a twofold serial dilution procedure which determined the Minimum Inhibitory Concentration ("MIC") of test compound required to inhibit the growth of an algal inoculum. McLachlan's Medium (prepared according to J. McLachlan, "The Culture of Dunaliella Tertiolecta Butcher - A Eurylialine Organism", Canadian Journal of Microbiology volume 6, 1960) was used for maintaining cultures and performing the tests. Tests were carried out in 96 well, round bottom tissue culture plates. All incubation was done at 23 °C (± 2 °C).

Cultures were grown in 50 mL of medium contained in 250 mL baffle flasks with silicone sponge closures (Bellco Glass, Vineland, New Jersey, #200400004, 28mm), on a rotary shaker under constant cool white illumination. Log phase cultures (4-7 days old) were used in testing. The culture was standardized to an absorbance of 0.1 at 490 nm by addition of fresh medium. The standardized culture was then diluted with an equal volume of fresh medium. The inoculated medium was dispensed into a 96 well plate, using an eight channel microliter pipettor. Each well in Column 1 received 195 mL; all the other wells received 100 mL.

Solutions of test compound at 40x the highest concentration to be tested were prepared in an appropriate solvent. A single channel microliter pipettor was used to deliver 5 mL of the compound solution to three replicate wells of Column 1. Two wells in Column 1 received no compound solution and were used as reference growth control wells. The eight-channel pipettor was used to mix the contents of Column 1 by drawing up and dispensing back to the wells a 100 mL volume. This was repeated 3-4 times, then 100 mL from the wells in Column 1 were transferred to Column 2. The mixing and transferring process was continued through Column 12, with the excess 100 mL from the well in Column 12 discarded. The plates were covered with plastic tissue culture lids, placed inside plastic bags with zipper seals, and placed under fluorescent lights to incubate for one week. At the end of that time, the plates were examined for growth, as evidenced by easily visible green color, using a mirrored microplate reader.

Results were recorded as the median of the three replicate results and are reported below as the minimum concentration to inhibit growth (MIC).

| Compound # | *Amphora* EC₅₀ (ppm) | *Dunaliella* MIC (ppm) |
|---|---|---|
| 1 | 5 | 0.6 |

Compounds showing activity against *Amphora* at less than 10 ppm are considered to have moderate activity against soft fouling organisms. Compounds showing activity against *Duniella* at less than 1 ppm are considered to have high activity against soft fouling organisms. These results demonstrate the compounds of formula I are efficacious against soft fouling organisms in low concentrations.

### Example 3 - Activity Against Hard Fouling Organisms

Tests were conducted to determine the toxicity of the marine antifouling agents of the invention to *Artemia. Artemia,* marine crustaceans, are indicative of hard fouling organisms.

Substitute ocean water was prepared following ASTM Method D 1141-90. The water was sterilized by filtration through a 0.22 micron cellulose acetate membrane filter. San Francisco Bay Brand® (San Francisco Bay Brand, Inc., Newark, California) *Artemia salina* cysts were purchased from a local aquarium supply store. The cysts were hatched in a 250 mL Erlenmeyer flask as follows: Cysts (0.2 g) were weighed into a sterilized flask. One hundred mL of sterile ASTM sea water was added to the flask. The flask was placed on an orbital shaker set at approximately 150 rotations per minute and 28 °C. After 24 hours, the contents of the flask were poured into a separatory funnel. The egg shells were separated from the *Artemia* nauplii (larvae), as the shells floated to the top. The nauplii were returned to the flask for another 24 hours shaking. The inoculum was prepared by pouring the nauplii into a crystallizing dish 48 hours after the cysts were originally placed on the shaker. After the nauplii congregated, they were taken up in a sterile serological pipette and transferred into another crystallizing dish. The suspension was stirred with a magnetic stirrer enough to keep the nauplii in suspension. Eighty mL of sterile sea water was added to the suspension. Using an eight channel microliter pipettor loaded with wide bore pipette tips, 100 uL of the suspension was transferred into a column of a 96 well, flat bottom, tissue culture plate. The number of nauplii in 3 to 4 wells was counted under a microscope. The number was averaged, and the inoculum was adjusted through further dilution to give 25 to 30 nauplii per 100 mL.

Stock solutions of the compound to be tested were prepared on a weight to volume basis at 40 times the highest concentration to be tested. Solvents were chosen based on the solubility of the compound to be tested. Solvents used were DMSO, acetone, or isopropanol. The solvents were tested to make sure that they had no effect on the test results.

Ninety-six well, flat bottom, tissue culture plates were used for these tests. One hundred ninety mL of sterile ASTM sea water was added to column 1 of each plate. One hundred mL of sterile ASTM sea water was added to columns 2 through 12 of each plate. Ten mL of a stock solution of one compound to be tested was added to the first three wells of column 1. The next 2 wells were skipped, as they serve as untreated controls. Ten mL of a stock solution of a second compound to be tested was added to the last three wells of column 1. Serial dilutions were performed by mixing and transferring 100 mL from column 1 to column 2, then from column 2 to 3, and the process was continued until all 12 columns were diluted. One hundred mL from column 12 was discarded. One hundred mL of the stirred *Artemia* inoculum was added to each well of the plate. The test plate was covered with a plastic tissue culture plate lid and incubated for 24 hours at 25 °C.

Plates were read under a low magnification microscope 24 hours after the nauplii were added to the plate. The dilution at which all of the nauplii are dead is the LCioo. Nauplii are considered alive if any movement is seen during the viewing period. Results of this test are shown below.

| Compound # | 24 hr. LC₁₀₀ | 48 hr. LC₁₀₀ |
|---|---|---|
| 1 | 50 | 6.2 |

Compounds showing activity against *Artemia* at 5-25 ppm are considered to have moderate activity against hard fouling organisms. These results demonstrate that the compounds of this invention are efficacious against hard fouling organisms.

### Example 4 - Marine Antifoulant Paint

Tests were conducted to determine the antifoulant efficacy of the compounds of Formula I when incorporated into a marine paint.

Paint samples were prepared for evaluation according to the recommendations for evaluation of marine antifoulants for ship bottom paint by the Working Group SR209 of the Japan Shipbuilder Association (1990-1995). The paint was prepared according to the following formulation:

| Ingredient | Wt. % |
|---|---|
| Priolite S-5B (35%), (Goodyear Chemical) | 4 |
| Rosin (60%) | 8 |
| Tricrecylphosphate | 2 |
| Ferrous Oxide 120ED (Toda) | 10 |
| Bentone #38 dispersant (Rheox Co.) | 1 |
| Disparon 4200-20 (Manufacturer?) | 1 |
| Copper Oxide | 40 |
| Xylene | 29 |
| Compound of Formula I | 5 |

Two coats of this paint composition were applied one day apart to fiber reinforced plastic panels which were pre-primed with a standard fiber reinforced plastic primer. Each coat was annroximatelv 60 m thick. The panels were submerged at 1.5 meter depth at two different sea locations. The efficacy of the antifoulant paint was evaluated every other month using the following point system according to the protocol ASTM D610-68 (incorporated herein by reference):

| | Marine Organisms Attached | | |
|---|---|---|---|
| Points | Foulings | Plants | Slime |
| 5 | Nothing | - | - |
| 4 | <5% | - | - |
| 3 | 6-10% | Nothing | Nothing |
| 2 | 11-25% | Thin | Thin |
| 1 | 26-50% | Moderate | Moderate |
| 0 | >51% | Thick | Thick |

Efficacy was estimated by the sum of total points for front and back of the panel as a percentage of the total possible points (22). The results are as follows:

| Compound # | Location 1 | Location 2 |
|---|---|---|
| 1 | 68.2 | 67.6 |
| Control* | 46.7 | 46.0 |

| | | |
|---|---|---|
| * = Identical paint without Compound # 1 | | |

These data indicate that the Compounds of Formula I are effective in marine antifoulant paints.

### Example 5 - Wood Rot

Using MIC tests analogous to those of Example 1, tests were conducted against common wood rot organisms *Phialaphora mutabilis* (White Rot) and *Gloeophyllum trabeum* (Brown Rot). Results of the MIC tests are shown below.

| Compound # | P. *mutabilis* | G. *trabeum* |
|---|---|---|
| 1 | 20-10 | 10 |

These results indicate that the compounds of Formula I have activity against wood rotting organisms.

## Claims

1. A method of inhibiting the growth of microorganisms in, at, or on a locus subject to microbial attack, comprising introducing to the locus an antimicrobially effective amount of at least one antimicrobial agent of the formula: 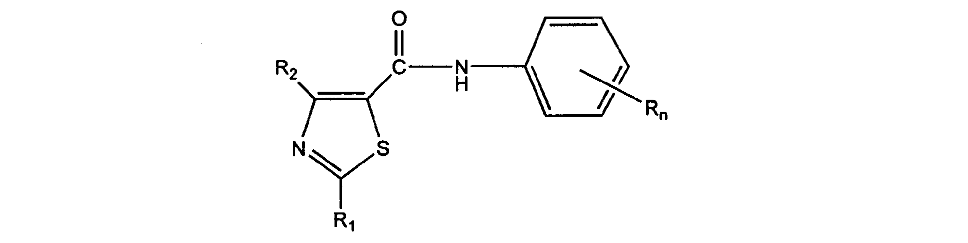 wherein:
R₁ is (C₁-C₂)haloalkyl or (C₁C₅)alkyl;
R₂ is (C₁-C₅)alkyl or (C₁-C₂)haloalkyl;
each R is independently halo, halo(C₁-C₅)alkyl, halo(C₁-C₅)alkoxy, nitro, cyano, pentahalosulfur, halomethylthio, haloethylthio, (C₁-C₂)alkylsulfinyl, halo(C₁-C₂)alkylsulfinyl, (C₁-C₂)alkylsulfonyl, or halo(C₁-C₂)alkylsulfonyl;
n is from one to five;
and its microbicidal acceptable salts; and
provided that at least one of R₁ and R₂ is a (C₁-C₂)haloalkyl.

2. The method of claim 1 wherein the antimicrobial agent is of the formula: 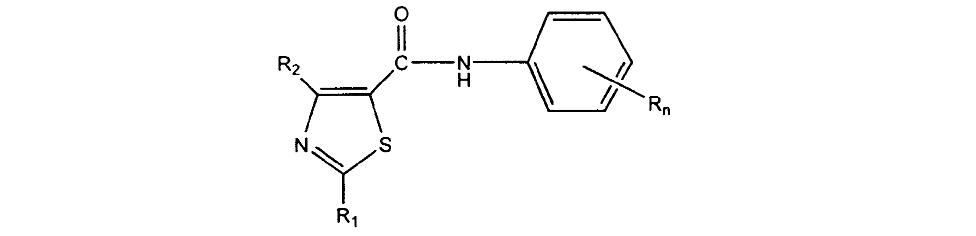 wherein:
R₁ is methyl, ethyl, or trifluoromethyl;
R₂ is halomethyl;
each R is independently fluoro, bromo, halo(C₁-C₂)alkyl, halo(C₁-C₂)alkoxy, or pentafluorosulfur; and
n is two to five;
and its sodium or potassium salts.

3. The method of claim 1 wherein the antimicrobial agent is of the formula: 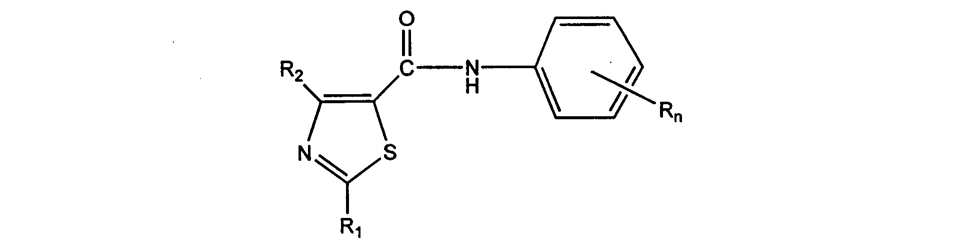 wherein:
R₁ is methyl or trifluoromethyl;
R₂ is trifluoromethyl;
Rₙ is selected from the group consisting of:
a) 2,3,4,5,6-pentafluoro;
b) 2,6-dibromo-3-trifluoromethyl; and
c) 3,4-difluoro; and
its sodium or potassium salts.

4. The method of claim 1 wherein the locus is selected from the group consisting of cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; coatings; construction products; construction adhesives; industrial or consumer adhesives; photographic chemicals; printing fluids; household products; cosmetics and toiletries; shampoos; soaps; detergents; industrial disinfectants or sanitizers; floor polishes; laundry rinse water; metalworking fluids; conveyor lubricants; hydraulic fluids; leather and leather products; textiles; textile products; wood and wood products; petroleum processing fluids; fuel; oil field fluids; surfactant preservation; medical devices; diagnostic reagent preservation; food preservation; pools; and spas.

5. The method of claim 1 wherein the antimicrobially effective amount is from 0.05 to 10,000 ppm based on the weight of the locus.

6. The method of claim 1 further comprising a second antimicrobial agent selected from the group consisting of: methylenebis(thiocyanate); isothiazolones; carbamates; heterocyclic compounds; oxidants; carboxylic acids and their derivatives; alcohols and amines; ammonium and phosphonium salts; aldehydes, ketones and formaldehyde releasers; halogenated aromatic compounds; halogenated aliphatic compounds; alkenes; inorganic compounds; enzymes; and surfactants.

7. A method of controlling or inhibiting the growth of marine organisms on a marine structure comprising introducing into or onto the structure to be protected a marine antifoulant effective amount of a compound of the formula: 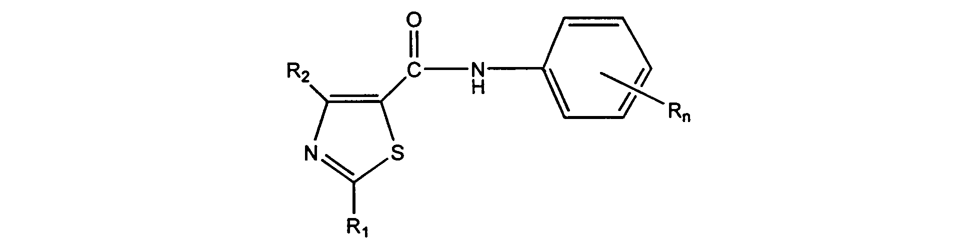 wherein:
R₁ is (C₁-C₂)haloalkyl or (C₁-C₅)alkyl;
R₂ is (C₁-C₅)alkyl or (C₁-C₂)haloalkyl;
each R is independently halo, halo(C₁-C₅)alkyl, halo(C₁-C₅)alkoxy, nitro, cyano, pentahalosulfur, halomethylthio, haloethylthio, (C₁C₂)alkylsulfinyl, halo(C₁-C₂)alkylsulfinyl, (C₁-C₂)alkylsulfonyl, or halo(C₁-C₂)alkylsulfonyl;
n is from one to five;
and its marine antifoulant acceptable salts; and
provided that at least one of R₁ and R₂ is a (C₁-C₂)haloalkyl.

8. The method of claim 7 wherein the compound is of the formula: 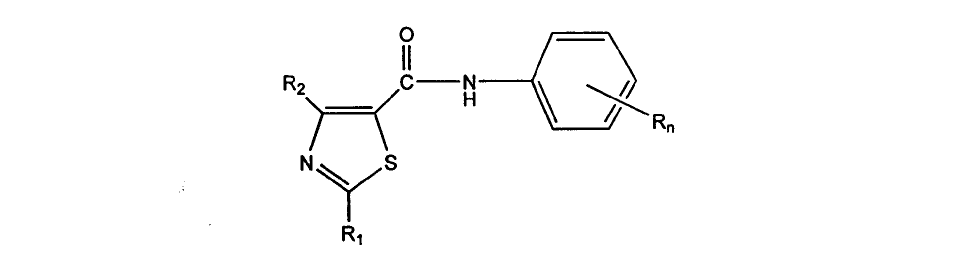 wherein:
R₁ is methyl, ethyl, or trifluoromethyl;
R₂ is halomethyl;
each R is independently fluoro, bromo, halo(C₁C₂)alkyl, halo(C₁-C₂)alkoxy, or pentafluorosulfur; and
n is two to five;
and its sodium or potassium salts.

9. The method of claim 8 wherein the compound is of the formula: 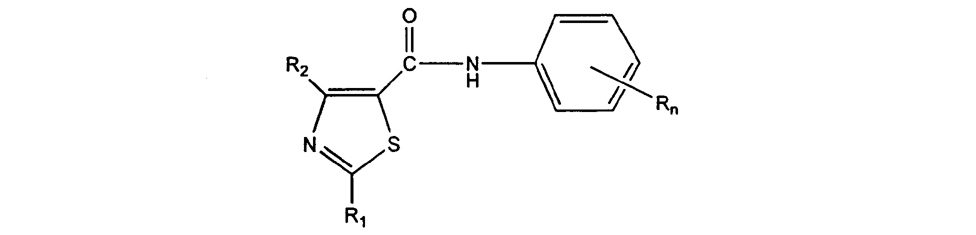 wherein:
R₁ is methyl or trifluoromethyl;
R₂ is trifluoromethyl;
Rₙ is selected from the group consisting of:
a) 2,3,4,5,6-pentafluoro;
b) 2,6-dibromo-3-trifluoromethyl; and
c) 3,4-difluoro; and
and its sodium or potassium salts.

10. The method of claim 7 wherein the marine structure is selected from the group consisting of: boats, ships, oil platforms, piers, pilings, docks, elastomeric rubbers, fish nets, and fish line.
